# EUROPÄISCHE PATENTSCHRIFT

(11) **EP 3 830 671 B1**
(45) Veröffentlichungstag und Bekanntmachung des Hinweises auf die Patenterteilung: **09.04.2025**
(21) Anmeldenummer: 19732312.4
(22) Anmeldetag: 17.06.2019
(51) Int. Cl.: G06F 3/01, G01C 21/36, G01C 21/20

(54) **KONZEPT ZUM VERMITTELN EINER RICHTUNGSANGABE AN EINEN NUTZER**
CONCEPT TO COMMUNICATE A DIRECTIONINFORMATION TO A USER
CONCEPT POUR COMMUNIQUER UNE INDICATION D'UNE DIRECTION A UN UTILISATEUR

(30) Priorität: 01.08.2018 DE 102018212869
(43) Veröffentlichungstag der Anmeldung: 09.06.2021
(73) Patentinhaber: VOLKSWAGEN AKTIENGESELLSCHAFT, 38440 Wolfsburg (DE)
(72) Erfinder: TÜMLER, Johannes, 39167 Wellen (DE); HAAR, Adrian, 30173 Hannover (DE)
(86) Internationale Anmeldenummer: PCT/EP2019/065901
(87) Internationale Veröffentlichungsnummer: WO 2020/025216

(56) Entgegenhaltungen:
- WO-A1-2017/095790
- FR-A1- 3 026 638
- US-A1- 2002 111 737
- US-A1- 2012 116 672
- US-A1- 2015 197 283
- US-A1- 2016 009 411

## Beschreibung

Die vorliegende Erfindung betrifft ein Verfahren, eine Vorrichtung und ein computerlesbares Speichermedium mit Instruktionen zum Vermitteln einer Richtungsangabe an einen Nutzer. Die Erfindung betrifft weiterhin ein mobiles Gerät, das zur Verwendung mit einem solchen Verfahren oder einer solchen Vorrichtung geeignet ist.

Bereits seit Jahren lässt sich eine zunehmende Verbreitung digitaler Technologien in der Gesellschaft feststellen. Es steht zu erwarten, dass diese Digitalisierung der Gesellschaft im Alltag deutlich zunehmen wird. Virtual- und Augmented-Reality-Technologien und -Anwendungen stellen eine besondere Ausprägung der Digitalisierung dar. Bei Augmented Reality (AR), auf Deutsch "erweiterte Realität", handelt es sich um die Anreicherung der realen Welt durch virtuelle Elemente, die im dreidimensionalen Raum ortskorrekt registriert sind und eine Echtzeitinteraktion erlauben. Da sich in der Fachwelt im deutschsprachigen Raum der Ausdruck "Augmented Reality" gegenüber dem Ausdruck "erweiterte Realität" durchgesetzt hat, wird im Folgenden ersterer benutzt. Synonym wird auch der Ausdruck "Mixed Reality" verwendet. Für die Darstellung von AR-Anzeigen können beispielsweise Augmented-Reality-Brillen genutzt werden. Eine Augmented-Reality-Brille wird wie eine normale Brille getragen, weist aber eine oder mehrere Projektionseinheiten oder Anzeigen auf, mit deren Hilfe dem Träger der Brille Informationen vor die Augen oder direkt auf die Netzhaut projiziert werden können. Die Brille ist dabei so gestaltet, dass der Träger auch die Umgebung wahrnehmen kann. Neue Technologien für Augmented-Reality-Brillen, beispielsweise Lichtfeldtechnologie, Fortschritte in der verwendeten Batterietechnik sowie der Einstieg großer Unternehmen in diese lassen eine steigende Akzeptanz dieser Geräte erwarten.

Alternativ können AR-Anzeigen auch mittels Augmented-Reality-Smartphones oder Augmented-Reality-Tablets generiert werden. Dabei werden virtuelle Elemente auf dem Display des jeweiligen Gerätes zusammen mit der von einer Kamera des jeweiligen Gerätes aufgenommenen Umgebung angezeigt. Auch eine Projektion von Inhalten in die reale Umgebung ist möglich.

Insgesamt ist absehbar, dass Augmented-Reality-Brillen, Augmented-Reality-Smartphones und andere Augmented-Reality-Geräte bei Endkunden zunehmend stärker im Einsatz sein werden. Ein wesentlicher Anwendungsfall für portable Augmented-Reality-Systeme ist die Navigation, sowohl in Fortbewegungsmitteln als auch außerhalb von Fortbewegungsmitteln. Die Ausgabe von Navigationsanweisungen kann dabei durch einfache Bewegungsanweisungen erfolgen, z.B. in Form von Richtungspfeilen oder Hinweistexten. Eine weitere Möglichkeit besteht darin, dass ein visueller Pfad in die Umgebung eingeblendet wird, dem der Nutzer folgen soll.

Beispielsweise beschreibt DE 10 2017 111 843 A1 ein System, um einen Nutzer mittels Gehanweisungen in erweiterter Realität dynamisch von einem gegenwärtigen Nutzerstandort zu einem Abholungsort eines autonom fahrenden Fahrzeugs zu führen. Die Gehanweisungen werden dem Nutzer auf einem Display einer mobilen oder tragbaren Nutzervorrichtung präsentiert. Die Gehanweisungen in Form von Fußspuren oder Linien werden in Echtzeit dynamisch erzeugt und ändern sich, während sich der Nutzer mit der tragbaren Nutzervorrichtung bewegt.

Navigationsanweisungen können auch durch rein akustische Ausgaben unter Nutzung einer akustischen virtuellen Realität vermittelt werden.

Beispielsweise beschreibt US 2004/0030491 A1 ein Verfahren für eine audio-basierte Führung eines Benutzers entlang eines Zielpfades mittels virtueller Audio-Beacons. Der aktuelle Standort des Benutzers wird erfasst und mit dem Zielpfad verglichen. Dem Benutzer werden Töne zugeführt, beispielsweise über Stereokopfhörer, um ein oder mehrere Audio-Beacons zu simulieren, die scheinbar in einer Richtung angeordnet sind, die von der aktuellen Position des Benutzers aus zumindest näherungsweise der Richtung des Zielpfads entspricht.

Eine weitere Möglichkeit besteht in der Verwendung haptischer Ausgaben, gegebenenfalls auch in Kombination mit dynamischen visuellen Anzeigen.

Vor diesem Hintergrund beschreibt US 9,658,072 B1 ein Verfahren zur Ausgabe einer Richtungsrückmeldung an einen Nutzer. Durch eine Sensorik werden die geographische Position eines mobilen Gerätes, die Ausrichtung des mobilen Gerätes im Raum sowie eine Richtung, in die das mobile Gerät zeigt, bestimmt. Diese Informationen werden mit einem vom Nutzer spezifizierten gewünschten Ziel oder Weg verglichen. Sofern Position und Ausrichtung des mobilen Geräts im Raum sowie die Richtung, in die das mobile Gerät zeigt, mit dem gewünschten Ziel oder Weg konsistent sind, erfolgt eine Richtungsrückmeldung an den Nutzer. Diese kann in Form einer haptischen Rückmeldung erfolgen, beispielsweise durch Vibration.

US 2012/0166077 A1 beschreibt ein Verfahren zur Ausgabe von Navigationsanweisungen an einen Nutzer mit Signalen niedriger Bandbreite. Bei dem Verfahren werden Navigationsanweisungen in Form von unterschiedlichen Mustern taktiler Vibrationen kodiert, die von einem Gerät als haptisches Feedback an den Nutzer weitergegeben werden. Der Nutzer kann die Vibrationen wahrnehmen und in die Navigationsanweisungen übersetzen, ohne spezielle Dekodiergeräte oder spezielle Techniken verwenden zu müssen. Die Vibrationen können mit leicht zu merkenden Mustern kodiert werden, so dass ein vollständiger und reichhaltiger Navigationsfunktionsumfang mit minimaler Einarbeitung durch den Nutzer erreicht werden kann.

WO 2017/095790 A1 beschreibt Ansätze zur Erhöhung der Sicherheit für einen Fahrer eines Kraftfahrzeugs, wenn dieser ein Head-Mounted-Display (HMD) verwendet. Das HMD weist Aktuatoren auf, die dem Fahrer eine taktile Rückmeldung geben können. Mittels einer solchen taktilen Rückmeldung kann der Fahrer auf eine Gefahr aufmerksam gemacht werden. Über die Position der taktilen Rückmeldung kann dabei eine Richtung vermittelt werden, in der sich die Gefahr befindet.

US 2012/0116672 A1 beschreibt eine mobile Plattform mit haptischen Feedback-Elementen, die in Bereichen der mobilen Plattform positioniert sind, die sich in der Nähe eines Gesichtsbereichs eines Benutzers befinden, während der Benutzer die mobile Plattform an ein Ohr hält. Die mobile Plattform ist in der Lage, einen aktuellen Standort zu bestimmen und einen gewünschten Standort zu empfangen, der z.B. ein vom Benutzer angegebener Standort, ein Standort mit besserer Signalstärke oder ein Standort einer anderen mobilen Plattform sein kann. Die mobile Plattform bestimmt Richtungsangaben vom aktuellen Standort zum gewünschten Standort und setzt die Richtungsangaben in Steuersignale um. Als Reaktion auf die Steuersignale werden von den haptischen Rückkopplungselementen haptische Signale für den Gesichtsbereich des Benutzers erzeugt, wodurch dem Benutzer die Richtungsangaben vermittelt werden.

FR 3 026 638 A1 beschreibt eine Vorrichtung zur Führung eines Nutzers durch die Umgebung entlang einer Trajektorie mittels taktiler Stimulation. Die Vorrichtung umfasst einen Speicher mit einer Umgebungskarte, eine Recheneinheit, Mittel zur Bestimmung der Position des Nutzers, Mittel zur Bestimmung des Azimuts des Nutzers, sowie Mittel zur taktilen Anzeige der Position eines Objekts in der Umgebung.

US 2015/0197283 A1 beschreibt ein System für die Kommunikation von Lenkeingaben. Das System nutzt eine Vielzahl von Aktoren, die in einem Lenkrad eines Fahrzeugs angeordnet sind, um eine Richtungsangabe zu vermitteln. Die Aktuatoren können auch genutzt werden, um mittels einer zufälligen Ansteuerung den Fahrer aufzuschrecken, falls er Ermüdungserscheinungen zeigt.

US 2002/0111737 A1 beschreibt ein Navigationssystem, das haptische Aktuatoren nutzt, um eine Richtungsführung mittels eines fühlbaren Navigationsstimulus für den Anwender des Systems bereitzustellen. Dabei wird die Richtung einer Bewegung ausgewertet, um festzustellen, ob ein Navigationsstimulus erforderlich ist.

US 2016/0009411 A1 beschreibt ein System zur Unterstützung einer visuellen Suche. Das System bestimmt eine Sichtrichtung eines Insassen eines Fortbewegungsmittels und vergleicht diese mit einer gewünschten Sichtrichtung. Mittels haptischer Signale wird bei einer Abweichung der Sichtrichtungen eine Richtungsangabe vermittelt.

Es ist eine Aufgabe der Erfindung, ein verbessertes Konzept für das Vermitteln einer Richtungsangabe an einen Nutzer bereitzustellen.

Diese Aufgabe wird durch Verfahren mit den Merkmalen des Anspruchs 1, durch ein computerlesbares Speichermedium mit Instruktionen gemäß Anspruch 5, durch eine Vorrichtung mit den Merkmalen des Anspruchs 6 sowie durch ein Gerät mit den Merkmalen des Anspruchs 7 gelöst. Bevorzugte Ausgestaltungen der Erfindung sind Gegenstand der abhängigen Ansprüche.

Gemäß einem ersten Aspekt der Erfindung umfasst ein Verfahren zum Vermitteln einer Richtungsangabe an einen Nutzer die Schritte:
- Erfassen einer Situation, in der das Vermitteln einer Richtungsangabe an den Nutzer erfolgen soll, auf Basis einer Blickrichtung des Nutzers, wobei zumindest dann eine Richtungsangabe an den Nutzer vermittelt werden soll, wenn die Blickrichtung des Nutzers von einer Zielrichtung abweicht, in die sich der Nutzer bewegen soll;
- Bestimmen einer zu vermittelnden Richtungsangabe, wobei die Richtungsangabe die Zielrichtung anzeigt; und
- Ansteuern zumindest eines Aktuators aus einer Gruppe von Aktuatoren zum Erzeugen eines haptischen Signals mit einer Richtungscharakteristik gemäß der zu vermittelnden Richtungsangabe;
wobei das Vermitteln einer Richtungsangabe an den Nutzer unterbleibt, wenn sich der Nutzer trotz abweichender Blickrichtung in die Zielrichtung bewegt.

Entsprechend enthält ein computerlesbares Speichermedium Instruktionen, die bei Ausführung durch einen Computer den Computer zur Ausführung der folgenden Schritte zum Vermitteln einer Richtungsangabe an einen Nutzer veranlassen:
- Erfassen einer Situation, in der das Vermitteln einer Richtungsangabe an den Nutzer erfolgen soll, auf Basis einer Blickrichtung des Nutzers, wobei zumindest dann eine Richtungsangabe an den Nutzer vermittelt werden soll, wenn die Blickrichtung des Nutzers von einer Zielrichtung abweicht, in die sich der Nutzer bewegen soll;
- Bestimmen einer zu vermittelnden Richtungsangabe, wobei die Richtungsangabe die Zielrichtung anzeigt; und
- Ansteuern zumindest eines Aktuators aus einer Gruppe von Aktuatoren zum Erzeugen eines haptischen Signals mit einer Richtungscharakteristik gemäß der zu vermittelnden Richtungsangabe;
wobei das Vermitteln einer Richtungsangabe an den Nutzer unterbleibt, wenn sich der Nutzer trotz abweichender Blickrichtung in die Zielrichtung bewegt.

Der Begriff Computer ist dabei breit zu verstehen. Insbesondere umfasst er auch mobile prozessorbasierte Datenverarbeitungsvorrichtungen.

Analog dazu weist eine Vorrichtung zum Vermitteln einer Richtungsangabe an einen Nutzer auf:
- eine Auswertungseinheit zum Erfassen einer Situation, in der das Vermitteln einer Richtungsangabe an den Nutzer erfolgen soll, auf Basis einer Blickrichtung des Nutzers, wobei zumindest dann eine Richtungsangabe an den Nutzer vermittelt werden soll, wenn die Blickrichtung des Nutzers von einer Zielrichtung abweicht, in die sich der Nutzer bewegen soll;
- eine Richtungsbestimmungseinheit zum Bestimmen einer zu vermittelnden Richtungsangabe, wobei die Richtungsangabe die Zielrichtung anzeigt; und
- eine Ansteuereinheit zum Ansteuern zumindest eines Aktuators aus einer Gruppe von Aktuatoren zum Erzeugen eines haptischen Signals mit einer Richtungscharakteristik gemäß der zu vermittelnden Richtungsangabe;
wobei das Vermitteln einer Richtungsangabe an den Nutzer unterbleibt, wenn sich der Nutzer trotz abweichender Blickrichtung in die Zielrichtung bewegt.

Ein Gerät mit einer erfindungsgemäßen Vorrichtung weist zwei oder mehr Aktuatoren zum Erzeugen eines haptischen Signals auf. Das Gerät ist dazu ausgestaltet, vom Nutzer in der Hand gehalten oder am Körper getragen zu werden. Das Gerät kann beispielsweise ein Smartphone oder ein Tablet, eine Brille, eine Uhr, ein Ring oder ein Arm-, Fuß- oder Halsband sein. Bei einem Smartphone oder Tablet sind die Aktuatoren vorzugsweise am äußeren Rand lokalisiert, d.h. dort, wo das jeweilige Gerät gehalten wird. Bei einer Brille können die Aktuatoren in den Bügeln angeordnet sein. Bei Ringen, Arm-, Fuß- oder Halsbändern ist es sinnvoll, die Aktuatoren kreisförmig zu verteilen.

Die erfindungsgemäße Lösung basiert auf der Idee, haptische Aktuatoren bzw. Stimulatoren zu nutzen, um dem Nutzer ein haptisches Signal mit einer Richtungscharakteristik zu vermitteln. Die gewünschte räumliche Information wird durch gezieltes Ansteuern der jeweils in der entsprechenden Richtung angebrachten haptischen Aktuatoren vermittelt. Die konkrete Art der haptischen Stimulation spielt dabei keine Rolle.

Unterschiedliche Bereiche des Körpers sind unterschiedlich haptisch empfindlich. Beispielsweise haben die Fingerspitzen eine deutlich höhere haptische Auflösung als die Handfläche. Je nachdem, an welcher Körperstelle die Stimulation erfolgt, z.B. an Kopf, Hals, Hand oder Arm, wird eine entsprechend hohe Anzahl haptischer Aktuatoren vorgehalten, damit dynamische haptische Anzeigen räumlich gut lokalisiert werden können.

Erfindungsgemäß wird eine Richtungsangabe an den Nutzer vermittelt, wenn eine Navigationsanweisung ausgegeben werden soll. Die Richtungsangabe zeigt dabei eine Zielrichtung an, in die sich der Nutzer bewegen soll. Dies kann einerseits dergestalt geschehen, dass eine Richtung angezeigt wird, in die der Nutzer seine aktuelle Ausrichtung ändern soll. Beispielsweise kann ein Fußgänger, der ein Smartphone mit am Rand angeordneten haptischen Aktuatoren in der Hand hält, durch Ansteuern von Aktuatoren auf der linken Seite des Smartphones angewiesen werden, sich nach links zu drehen. Dies geschieht so lange, bis der Fußgänger die korrekte Ausrichtung erreicht hat. Über die Intensität oder ein Muster der haptischen Stimulation kann vermittelt werden, wie groß die aktuelle Abweichung von der korrekten Ausrichtung ist. Alternativ kann direkt die Zielrichtung vermittelt werden. Trägt der Fußgänger beispielsweise eine Augmented-Reality-Brille mit integrierten Aktuatoren, können gezielt diejenigen Aktuatoren angesteuert werden, die aus Sicht des Fußgängers in der Zielrichtung liegen. Soll der Fußgänger z.B. zurückgehen, d.h. sich um 180° drehen, kann ein Aktuator am Hinterkopf angesteuert werden. Auf beide Weisen können Navigationsanweisungen vermittelt werden, die intuitiv vom Nutzer verstanden werden.

Erfindungsgemäß wird die Richtungsangabe an den Nutzer vermittelt, wenn die Blickrichtung des Nutzers von der Zielrichtung abweicht. Das Abweichen der Blickrichtung des Nutzers von der Zielrichtung ist ein deutliches Anzeichen dafür, dass der Nutzer Unterstützung bei der Navigation benötigt, d.h. dass eine Richtungsangabe erforderlich ist. Dabei wird zusätzlich berücksichtigt, ob sich der Nutzer trotz abweichender Blickrichtung in die richtige Richtung bewegt. In diesem Fall unterbleibt eine zusätzliche Richtungsangabe, da der Nutzer mit hoher Wahrscheinlichkeit lediglich etwas Interessantes in seiner Umgebung betrachtet. Ebenso kann eine Richtungsangabe erst dann vermittelt werden, wenn die Blickrichtung des Nutzers für eine gewisse Mindestdauer von der Zielrichtung abweicht.

Gemäß einem Aspekt der Erfindung wird beim Ansteuern des zumindest eines Aktuators aus der Gruppe von Aktuatoren eine Lage der Aktuatoren im Raum berücksichtigt. Dies ist insbesondere dann sinnvoll, wenn durch die Aktuatoren unmittelbar eine Zielrichtung vermittelt werden soll. In diesem Fall muss zunächst bestimmt werden, welcher Aktuator aus Sicht des Nutzers in Zielrichtung liegt. Ändert der Nutzer aufgrund der haptischen Ausgabe seine Position oder Orientierung bzw. Position oder Orientierung des Geräts, in dem die Aktuatoren angeordnet sind, werden dementsprechend die nun relevant gewordenen Aktuatoren genutzt.

Gemäß einem Aspekt der Erfindung wird zusätzlich zum haptischen Signal ein visuelles Signal oder ein akustisches Signal erzeugt. Beispielsweise können so zusätzliche Angaben zu einer drohenden Gefahr oder unterstützende Navigationsanweisungen in Form von Sprachanweisungen, Navigationspfeilen oder eines eingeblendeten Pfades bereitgestellt werden.

Besonders vorteilhaft wird ein erfindungsgemäßes Verfahren oder eine erfindungsgemäße Vorrichtung in einem mobilen Augmented-Reality-Gerät eingesetzt, beispielsweise in einer Augmented-Reality-Brille, in einem Augmented-Reality-Smartphone oder in einem Augmented-Reality-Tablet.

Weitere Merkmale der vorliegenden Erfindung werden aus der nachfolgenden Beschreibung und den angehängten Ansprüchen in Verbindung mit den Figuren ersichtlich.
- Fig. 1: zeugt schematisch ein Verfahren zum Vermitteln einer Richtungsangabe an einen Nutzer;
- Fig. 2: zeigt schematisch eine erste Ausführungsform einer Vorrichtung zum Vermitteln einer Richtungsangabe an einen Nutzer;
- Fig. 3: zeigt schematisch eine zweite Ausführungsform einer Vorrichtung zum Vermitteln einer Richtungsangabe an einen Nutzer;
- Fig. 4: zeigt schematisch eine Augmented-Reality-Brille mit haptischen Aktuatoren; und
- Fig. 5: zeigt schematisch ein Smartphone mit haptischen Aktuatoren.

Zum besseren Verständnis der Prinzipien der vorliegenden Erfindung werden nachfolgend Ausführungsformen der Erfindung anhand der Figuren detaillierter erläutert. Es versteht sich, dass sich die Erfindung nicht auf diese Ausführungsformen beschränkt und dass die beschriebenen Merkmale auch kombiniert oder modifiziert werden können, ohne den Schutzbereich der Erfindung zu verlassen, wie er in den angehängten Ansprüchen definiert ist.

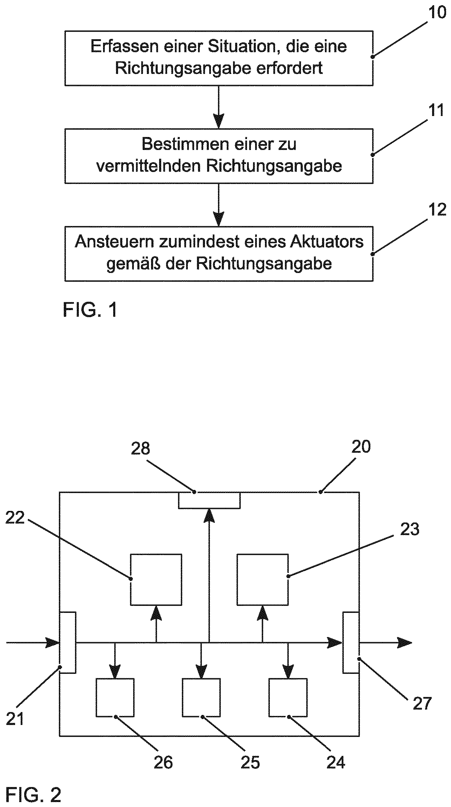

Fig. 1 zeigt schematisch ein Verfahren zum Vermitteln einer Richtungsangabe an einen Nutzer. Die Richtungsangabe wird an den Nutzer vermittelt, wenn eine Navigationsanweisung ausgegeben werden soll. Sie zeigt in diesem Fall eine Zielrichtung an, in die sich der Nutzer bewegen soll. Zunächst wird eine Situation erfasst 10, in der das Vermitteln einer Richtungsangabe an den Nutzer erfolgen soll. Dies geschieht auf Basis einer Blickrichtung des Nutzers, wobei zumindest dann eine Richtungsangabe an den Nutzer vermittelt werden soll, wenn die Blickrichtung des Nutzers von einer Zielrichtung abweicht, in die sich der Nutzer bewegen soll. Daraufhin wird eine zu vermittelnde Richtungsangabe bestimmt 11. Gemäß der zu vermittelnden Richtungsangabe wird schließlich zumindest ein Aktuator aus einer Gruppe von Aktuatoren zum Erzeugen eines haptischen Signals mit einer Richtungscharakteristik angesteuert 12. Dabei kann eine Lage der Aktuatoren im Raum berücksichtigt werden. Zusätzlich zum haptischen Signal kann ein visuelles Signal oder ein akustisches Signal erzeugt werden. Das Vermitteln einer Richtungsangabe an den Nutzer unterbleibt, wenn sich der Nutzer trotz abweichender Blickrichtung in die Zielrichtung bewegt.

Fig. 2 zeigt schematisch eine erste Ausführungsform einer Vorrichtung 20 zum Vermitteln einer Richtungsangabe an einen Nutzer. Die Richtungsangabe wird an den Nutzer vermittelt, wenn eine Navigationsanweisung ausgegeben werden soll. Sie zeigt dann eine Zielrichtung an, in die sich der Nutzer bewegen soll. Die Vorrichtung 20 hat einen Eingang 21, über den beispielsweise Daten zu einer Position und einer Blickrichtung eines Nutzers oder Nutzereingaben empfangen werden können. Die Vorrichtung 20 hat zudem eine Auswertungseinheit 22 zum Erfassen einer Situation, in der das Vermitteln einer Richtungsangabe an den Nutzer erfolgen soll, sowie eine Richtungsbestimmungseinheit 23 zum Bestimmen einer zu vermittelnden Richtungsangabe. Die Auswertungseinheit 22 wertet eine Blickrichtung des Nutzers aus, wobei zumindest dann eine Richtungsangabe an den Nutzer vermittelt werden soll, wenn die Blickrichtung des Nutzers von einer Zielrichtung abweicht. Eine Ansteuereinheit 24 dient zum Ansteuern zumindest eines Aktuators aus einer Gruppe von Aktuatoren zum Erzeugen eines haptischen Signals mit einer Richtungscharakteristik gemäß der zu vermittelnden Richtungsangabe. Die Ansteuereinheit 24 kann dabei eine Lage der Aktuatoren im Raum berücksichtigen. Über einen Ausgang 27 der Vorrichtung 20 werden die Steuersignale an die anzusteuernden Aktuatoren ausgegeben. Zusätzlich zum haptischen Signal kann ein visuelles Signal oder ein akustisches Signal erzeugt werden. Das Vermitteln einer Richtungsangabe an den Nutzer unterbleibt, wenn sich der Nutzer trotz abweichender Blickrichtung in die Zielrichtung bewegt.

Die Auswertungseinheit 22, die Richtungsbestimmungseinheit 23 und die Ansteuereinheit 24 können von einer Kontrolleinheit 25 gesteuert werden. Über eine Benutzerschnittstelle 27 können gegebenenfalls Einstellungen der Auswertungseinheit 22, der Richtungsbestimmungseinheit 23, der Ansteuereinheit 24 oder der Kontrolleinheit 25 geändert werden. Die in der Vorrichtung 20 anfallenden Daten können bei Bedarf in einem Speicher 26 der Vorrichtung 20 abgelegt werden, beispielsweise für eine spätere Auswertung oder für eine Nutzung durch die Komponenten der Vorrichtung 20. Die Auswertungseinheit 22, die Richtungsbestimmungseinheit 23, die Ansteuereinheit 24 sowie die Kontrolleinheit 25 können als dedizierte Hardware realisiert sein, beispielsweise als integrierte Schaltungen. Natürlich können sie aber auch teilweise oder vollständig kombiniert oder als Software implementiert werden, die auf einem geeigneten Prozessor läuft, beispielsweise auf einer GPU oder einer CPU. Der Eingang 21 und der Ausgang 27 können als getrennte Schnittstellen oder als eine kombinierte bidirektionale Schnittstelle implementiert sein. Im beschriebenen Beispiel ist die Vorrichtung 20 eine eigenständige Komponente. Sie kann aber ebenso in einem Gerät, das zur Verwendung mit der Vorrichtung 20 geeignet ist, oder in einer Recheneinheit zur Ansteuerung eines solchen Gerätes integriert sein.

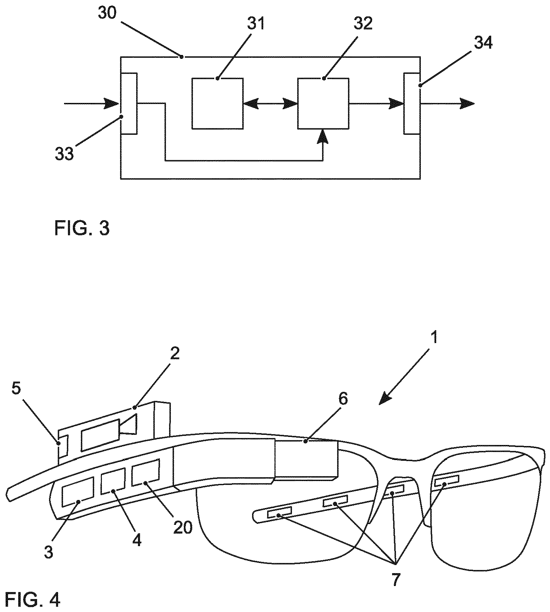

Fig. 3 zeigt schematisch eine zweite Ausführungsform einer Vorrichtung 30 zum Vermitteln einer Richtungsangabe an einen Nutzer. Die Vorrichtung 30 weist einen Prozessor 32 und einen Speicher 31 auf. Beispielsweise handelt es sich bei der Vorrichtung 30 um einen Computer oder eine mobile Recheneinheit, z.B. in einem Tablet oder in einem Smartphone. Im Speicher 31 sind Instruktionen abgelegt, die die Vorrichtung 30 bei Ausführung durch den Prozessor 32 veranlassen, die Schritte gemäß einem der beschriebenen Verfahren auszuführen. Die im Speicher 31 abgelegten Instruktionen verkörpern somit ein durch den Prozessor 32 ausführbares Programm, welches das erfindungsgemäße Verfahren realisiert. Die Vorrichtung 30 hat einen Eingang 33 zum Empfangen von Informationen. Vom Prozessor 32 generierte Daten werden über einen Ausgang 34 bereitgestellt. Darüber hinaus können sie im Speicher 31 abgelegt werden. Der Eingang 33 und der Ausgang 34 können zu einer bidirektionalen Schnittstelle zusammengefasst sein.

Der Prozessor 32 kann eine oder mehrere Prozessoreinheiten umfassen, beispielsweise Mikroprozessoren, digitale Signalprozessoren oder Kombinationen daraus.

Die Speicher 26, 31 der beschriebenen Ausführungsformen können sowohl volatile als auch nichtvolatile Speicherbereiche aufweisen und unterschiedlichste Speichergeräte und Speichermedien umfassen, beispielsweise Festplatten, optische Speichermedien oder Halbleiterspeicher.

Fig. 4 zeigt schematisch eine Augmented-Reality-Brille mit Aktuatoren 7 als Beispiel für ein mobiles Gerät 1, das für zur Verwendung mit einem erfindungsgemäßen Verfahren oder einer erfindungsgemäßen Vorrichtung geeignet ist. Die Augmented-Reality-Brille hat eine Kamera 2 zum Erfassen von Umgebungsdaten einer Umgebung der Augmented-Reality-Brille. Mittels einer Posenbestimmungsvorrichtung 3 kann eine Pose der Augmented-Reality-Brille bestimmt werden, beispielsweise anhand der Umgebungsdaten. Eine Grafikeinheit 4 generiert eine Anzeige für die Augmented-Reality-Brille entsprechend der ermittelten Pose. Dazu können die Posenbestimmungsvorrichtung 3 und die Grafikeinheit 4 miteinander Daten austauschen. Die Posenbestimmungsvorrichtung 3 und die Grafikeinheit 4 können, wie im Beispiel dargestellt, Bestandteil der Augmented-Reality-Brille sein. Sie können aber auch als externe Geräte über eine Schnittstelle 5 mit der Augmented-Reality-Brille verbunden sein. Die von der Grafikeinheit 4 generierte Anzeige wird durch eine Projektionseinheit 6 eingeblendet. Im Beispiel in Fig. 1 wird ein monokulares Display genutzt, d.h. nur vor einem Auge des Nutzers ist ein Display angeordnet. Die vorliegend beschriebene Lösung kann selbstverständlich auch mit einer Augmented-Reality-Brille mit einem binokularen Display, bei dem pro Auge ein Display genutzt wird, oder mit einem binokularen Display, bei dem für beide Augen ein gemeinsames Display genutzt wird, realisiert werden. In den Bügeln der Augmented-Reality-Brille sind haptische Aktuatoren 7 angeordnet, mit denen Richtungsangaben an den Träger der Augmented-Reality-Brille vermittelt werden können. Die Ansteuerung der haptischen Aktuatoren 7 erfolgt durch eine entsprechende Vorrichtung 20, die, wie im Beispiel dargestellt, Bestandteil der Augmented-Reality-Brille sein kann. Die Vorrichtung 20 kann alternativ über die Schnittstelle 5 mit der Augmented-Reality-Brille verbunden sein. Im Falle einer Augmented-Reality-Brille, die mit einem Band am Kopf befestigt wird, sind die Aktuatoren 7 vorzugsweise kreisförmig im Kopfträger verteilt.

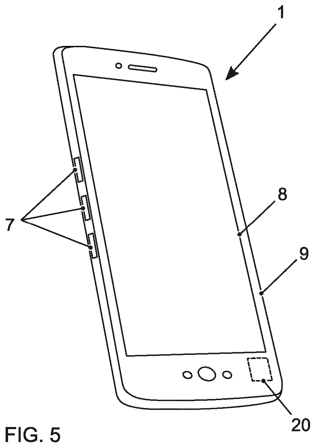

Fig. 5 zeigt schematisch ein Smartphone mit Aktuatoren 7 als Beispiel für ein mobiles Gerät 1, das zur Verwendung mit einem erfindungsgemäßen Verfahren oder einer erfindungsgemäßen Vorrichtung geeignet ist. Das Smartphone hat ein Display 8, das von einem Rahmen 9 eingefasst ist. Im Rahmen 9 angeordnet sind haptische Aktuatoren 7, mit denen Richtungsangaben an den Nutzer des Smartphones vermittelt werden können. Die Ansteuerung der haptischen Aktuatoren 7 erfolgt durch eine entsprechende Vorrichtung 20, die in Fig. 5 im Smartphone integriert ist. Die Vorrichtung 20 kann alternativ über eine drahtgebundene oder drahtlose Schnittstelle mit dem Smartphone verbunden sein.

### Bezugszeichenliste

- 1: Augmented-Reality-Gerät
- 2: Kamera
- 3: Schnittstelle
- 4: Posenbestimmungsvorrichtung
- 5: Grafikeinheit
- 6: Projektionseinheit
- 7: Aktuator
- 8: Smartphone
- 9: Display
- 10: Erfassen einer Situation, die eine Richtungsangabe erfordert
- 11: Bestimmen einer zu vermittelnden Richtungsangabe
- 12: Ansteuern zumindest eines Aktuators gemäß der Richtungsangabe
- 20: Vorrichtung
- 21: Eingang
- 22: Auswertungseinheit
- 23: Richtungsbestimmungseinheit
- 24: Ansteuereinheit
- 25: Kontrolleinheit
- 26: Speicher
- 27: Ausgang
- 28: Benutzerschnittstelle
- 30: Vorrichtung
- 31: Speicher
- 32: Prozessor
- 33: Eingang
- 34: Ausgang

## Patentansprüche

1. Computerimplementiertes Verfahren zum Vermitteln einer Richtungsangabe an einen Nutzer, wobei dem Computer eine Position und Blickrichtung des Nutzers zur Verfügung stehen, mit den Schritten:
- Erfassen (10) einer Situation, in der das Vermitteln einer Richtungsangabe an den Nutzer erfolgen soll, auf Basis der Blickrichtung des Nutzers, wobei zumindest dann eine Richtungsangabe an den Nutzer vermittelt werden soll, wenn die Blickrichtung des Nutzers von einer Zielrichtung abweicht, in die sich der Nutzer bewegen soll;
- Bestimmen (11) einer zu vermittelnden Richtungsangabe, wobei die Richtungsangabe die Zielrichtung anzeigt; und
- Ansteuern (12) zumindest eines Aktuators (7) aus einer Gruppe von Aktuatoren (7) zum Erzeugen eines haptischen Signals mit einer Richtungscharakteristik gemäß der zu vermittelnden Richtungsangabe;
wobei das Vermitteln einer Richtungsangabe an den Nutzer unterbleibt, wenn sich der Nutzer trotz abweichender Blickrichtung in die Zielrichtung bewegt.

2. Verfahren gemäß Anspruch 1, wobei nur dann eine Richtungsangabe an den Nutzer vermittelt wird, wenn die Blickrichtung des Nutzers für eine Mindestdauer von der Zielrichtung abweicht.

3. Verfahren gemäß Anspruch 1 oder 2, wobei beim Ansteuern (12) des zumindest eines Aktuators (7) aus der Gruppe von Aktuatoren (7) eine Lage der Aktuatoren (7) im Raum berücksichtigt wird.

4. Verfahren gemäß einem der vorherigen Ansprüche, wobei zusätzlich zum haptischen Signal ein visuelles Signal oder ein akustisches Signal erzeugt wird.

5. Computerlesbares Speichermedium mit Instruktionen, die bei Ausführung durch einen Computer den Computer zur Ausführung der Schritte eines Verfahrens gemäß einem der Ansprüche 1 bis 4 zum Vermitteln einer Richtungsangabe an einen Nutzer veranlassen.

6. Computergestützte Vorrichtung (20) zum Vermitteln einer Richtungsangabe an einen Nutzer, wobei der Vorrichtung eine Position und Blickrichtung des Nutzers zur Verfügung stehen, mit:
- einer Auswertungseinheit (22) zum Erfassen (10) einer Situation, in der das Vermitteln einer Richtungsangabe an den Nutzer erfolgen soll, auf Basis der Blickrichtung des Nutzers, wobei zumindest dann eine Richtungsangabe an den Nutzer vermittelt werden soll, wenn die Blickrichtung des Nutzers von einer Zielrichtung abweicht, in die sich der Nutzer bewegen soll;
- einer Richtungsbestimmungseinheit (23) zum Bestimmen (11) einer zu vermittelnden Richtungsangabe, wobei die Richtungsangabe die Zielrichtung anzeigt; und
- einer Ansteuereinheit (24) zum Ansteuern (12) zumindest eines Aktuators (7) aus einer Gruppe von Aktuatoren (7) zum Erzeugen eines haptischen Signals mit einer Richtungscharakteristik gemäß der zu vermittelnden Richtungsangabe;
wobei das Vermitteln einer Richtungsangabe an den Nutzer unterbleibt, wenn sich der Nutzer trotz abweichender Blickrichtung in die Zielrichtung bewegt.

7. Gerät (1) mit einer Vorrichtung gemäß Anspruch 6, wobei das Gerät (1) zwei oder mehr Aktuatoren (7) zum Erzeugen eines haptischen Signals aufweist, und wobei das Gerät (1) dazu ausgestaltet ist, vom Nutzer in der Hand gehalten oder am Körper getragen zu werden.

## Claims

1. Computer-implemented method for communicating direction information to a user, wherein a position and viewing direction of the user are available to the computer, comprising the steps of:
- detecting (10) a situation in which direction information is to be communicated to the user, on the basis of the viewing direction of the user, wherein direction information is to be communicated to the user at least when the viewing direction of the user deviates from a target direction in which the user is to move;
- determining (11) direction information to be communicated, wherein the direction information indicates the target direction; and
- controlling (12) at least one actuator (7) from a group of actuators (7) to generate a haptic signal having a directional characteristic according to the direction information to be communicated;
wherein direction information is not communicated to the user if the user moves in the target direction despite a deviating viewing direction.

2. Method according to claim 1, wherein direction information is communicated to the user only if the viewing direction of the user deviates from the target direction for a minimum period of time.

3. Method according to claim 1 or 2, wherein, when controlling (12) the at least one actuator (7) from the group of actuators (7), a position of the actuators (7) in space is taken into account.

4. Method according to any of the preceding claims, wherein, in addition to the haptic signal, a visual signal or an acoustic signal is generated.

5. Computer-readable storage medium comprising instructions that, when executed by a computer, cause the computer to execute the steps of a method according to any of claims 1 to 4 for communicating direction information to a user.

6. Computer-aided device (20) for communicating direction information to a user, wherein a position and viewing direction of the user are available to the device, comprising:
- an evaluation unit (22) for detecting (10) a situation in which direction information is to be communicated to the user, on the basis of the viewing direction of the user, wherein direction information is to be communicated to the user at least when the viewing direction of the user deviates from a target direction in which the user is to move;
- a direction determination unit (23) for determining (11) direction information to be communicated, wherein the direction information indicates the target direction; and
- a control unit (24) for controlling (12) at least one actuator (7) from a group of actuators (7) to generate a haptic signal having a directional characteristic according to the direction information to be communicated;
wherein direction information is not communicated to the user if the user moves in the target direction despite a deviating viewing direction.

7. Appliance (1) comprising a device according to claim 6, wherein the appliance (1) has two or more actuators (7) for generating a haptic signal, and wherein the device (1) is designed to be held in the hand or worn on the body by the user.

## Revendications

1. Procédé mis en œuvre par ordinateur pour la transmission d'une indication de direction à un utilisateur, dans lequel l'ordinateur dispose d'une position et d'une direction de regard de l'utilisateur, comportant les étapes consistant à :
- détecter (10) une situation dans laquelle la transmission d'une indication de direction à l'utilisateur doit être effectuée, sur la base de la direction de regard de l'utilisateur, dans lequel une indication de direction doit être transmise à l'utilisateur au moins lorsque la direction de regard de l'utilisateur dévie d'une direction cible vers laquelle l'utilisateur doit se déplacer ;
- déterminer (11) une indication de direction à transmettre, dans lequel l'indication de direction représente la direction cible ; et
- commander (12) au moins un actionneur (7) parmi un groupe d'actionneurs (7) pour la génération d'un signal haptique comportant une caractéristique de direction selon l'indication de direction à transmettre ;
dans lequel la transmission d'une indication de direction à l'utilisateur n'a pas lieu si l'utilisateur se déplace vers la direction cible malgré une direction de regard divergente.

2. Procédé selon la revendication 1, dans lequel une indication de direction est transmise à l'utilisateur uniquement si la direction de regard de l'utilisateur dévie de la direction cible pendant une durée minimale.

3. Procédé selon la revendication 1 ou 2, dans lequel une position des actionneurs (7) dans l'espace est prise en compte lors de la commande (12) de l'au moins un actionneur (7) parmi le groupe d'actionneurs (7).

4. Procédé selon l'une des revendications précédentes, dans lequel un signal visuel ou un signal acoustique est généré outre le signal haptique.

5. Support de stockage lisible par ordinateur comportant des instructions, lesquelles, lors de leur exécution par un ordinateur, amènent l'ordinateur à exécuter les étapes d'un procédé selon l'une des revendications 1 à 4 pour la transmission d'une indication de direction à un utilisateur.

6. Dispositif (20) assisté par ordinateur pour la transmission d'une indication de direction à un utilisateur, dans lequel le dispositif dispose d'une position et d'une direction de regard de l'utilisateur, comportant :
- une unité d'évaluation (22) permettant de détecter (10) une situation dans laquelle la transmission d'une indication de direction à l'utilisateur doit être effectuée, sur la base de la direction de regard de l'utilisateur, dans lequel une indication de direction doit être transmise à l'utilisateur au moins lorsque la direction de regard de l'utilisateur dévie d'une direction cible vers laquelle l'utilisateur doit se déplacer ;
- une unité de détermination de direction (23) permettant de déterminer (11) une indication de direction à transmettre, dans lequel l'indication de direction représente la direction cible ; et
- une unité de commande (24) permettant de commander (12) au moins un actionneur (7) parmi un groupe d'actionneurs (7) pour la génération d'un signal haptique comportant une caractéristique de direction selon l'indication de direction à transmettre ;
dans lequel la transmission d'une indication de direction à l'utilisateur n'a pas lieu si l'utilisateur se déplace vers la direction cible malgré une direction de regard divergente.

7. Appareil (1) comportant un dispositif selon la revendication 6, dans lequel l'appareil (1) présente deux actionneurs (7) ou plus permettant de générer un signal haptique, et dans lequel l'appareil (1) est conçu pour être tenu à la main ou porté sur le corps par l'utilisateur.
